# EUROPÄISCHE PATENTANMELDUNG

(11) **EP 3 608 104 A1**
(43) Veröffentlichungstag der Anmeldung: **12.02.2020**
(21) Anmeldenummer: 19183792.1
(22) Anmeldetag: 02.07.2019
(51) Int. Cl.: B41F 33/00, B41F 33/16, B41J 29/38, G06F 3/12

(54) **VERFAHREN ZUM RECHNERGESTÜTZTEN VERSORGEN EINES VERBUNDES VON MEHREREN MASCHINEN DER GRAFISCHEN INDUSTRIE MIT JEWEILIGEN DIGITALEN PRODUKTIONSAUFTRÄGEN**

(30) Priorität: 08.08.2018 DE 102018213302
(71) Anmelder: Heidelberger Druckmaschinen AG, 69115 Heidelberg (DE)
(72) Erfinder: Fischer, Jörg-Achim, 24235 Laboe (DE); Schnabel, Burghart, 24147 Kiel (DE)

(57) **Zusammenfassung**

Die Erfindung betrifft ein Verfahren zum rechnergestützten Versorgen eines Verbundes (1) von mehreren Maschinen (2a bis 2n) der grafischen Industrie mit jeweiligen digitalen Produktionsaufträgen (12a bis 12m), wobei wenigstens eine Maschine (2b) im Falle einer sensorisch (6b) erfassten Störung diese Maschine (2b) in einem digitalen Rechner (3) in einen eingeschränkten Zustand (10) versetzt wird und der Rechner (3) wenigstens einen digitalen Produktionsauftrag (12a bis 12m) für die Maschine (2b) unter Berücksichtigung der Störung auswählt und die Maschine (2b) im eingeschränkten Zustand (10) mit dem ausgewählten Produktionsauftrag (12a bis 12m) versorgt. Die Erfindung ermöglicht es mit Vorteil, die Gesamtproduktivität eines Verbundes aus mehreren Maschinen der grafischen Industrie, insbesondere Druckmaschinen, im Falle von Störungen an einzelnen Maschinen zu erhalten oder gar zu verbessern.

## Beschreibung

Die Erfindung betrifft ein Verfahren zum rechnergestützten Versorgen eines Verbundes von mehreren Maschinen der grafischen Industrie mit jeweiligen digitalen Produktionsaufträgen gemäß den Merkmalen von Anspruch 1.

### Technisches Gebiet und Stand der Technik

Die Erfindung liegt auf dem technischen Gebiet der grafischen Industrie und dort insbesondere im Bereich des Betriebs mehrerer Maschinen eines Verbundes bzw. eines Maschinenparks und der Versorgung dieser Maschinen mit Produktionsaufträgen.

Die Anschaffung einer Druckmaschine, z.B. einer Tintendruckmaschine, stellt für eine Druckerei in der Regel eine große Investition dar. Es ist daher unerlässlich, die neu angeschaffte Maschine sowie alle anderen Maschinen der Druckerei unter betriebswirtschaftlichen Aspekten optimal zu nutzen. Beim Betrieb mehrerer Maschinen in einer Druckerei können einerseits größere Mengen an Druckaufträgen verarbeitet werden und andererseits bilden mehrere Maschinen im Verbund eine größere Sicherheit gegen den Ausfall einer einzelnen Maschine. Es kann vorkommen, dass die Maschinen in der Druckerei unterschiedlich sind und daher auch nur unterschiedliche Druckaufträge ausführen können, z.B. Druckaufträge verschiedener Formatgrößen. Während eine Druckmaschine kleiner Formatklasse nur kleine Druckformate verarbeiten kann, kann eine Druckmaschine großer Formatklasse sowohl große als auch kleine Druckformate verarbeiten. In der Regel ist es unter betriebswirtschaftlichen Aspekten jedoch sinnvoll, kleine Druckformate auf Druckmaschinen kleiner Formatklassen zu drucken.

In einer Druckerei ist in der Regel ein Rechner vorgesehen, welcher den verschiedenen Maschinen der Druckerei die von ihnen abzuarbeitenden Druckaufträge zuweist. Dieses Zuweisen basiert auf bestimmten Regeln, wobei z.B. die folgenden Kriterien berücksichtigt werden können: Priorität eines Auftrages, Menge/Volumen eines Auftrages und /oder Qualitätsanforderung.

Im Stand der Technik kann das Problem auftreten, dass eine Maschine des Verbundes von Maschinen ausfällt.

Die DE 10 2004 030 496 A1 offenbart einen automatischen Produktionswegfinder bzw. ein Verfahren zum Auffinden von Herstellungsprozessen für Produkte in der grafischen Industrie. Dabei wird ein Netz aus Herstellungsprozessen gebildet, welches die Herstellung des Produkts in Abhängigkeit von an dem Herstellungsprozess beteiligten Ressourcen beschreibt. In einer besonders vorteilhaften Ausgestaltung ist dabei vorgesehen, dass bei Ausfall einer Ressource alternative Prozessnetze berechnet werden. Falls eine Ressource nicht mehr zur Verfügung steht, z.B. wenn eine Maschine ausfällt, wird durch den Rechner ein neues Prozessnetz berechnet, welches ohne diese Ressource auskommt.

Es kann im Stand der Technik jedoch auch das Problem auftreten, dass eine Druckmaschine nicht komplett ausfällt, sondern dass eine Maschine nur teilweise ausfällt, z.B. dadurch, dass nur eine Komponente der Maschine, beispielsweise einer von mehreren Druckköpfen, ausfällt.

### Aufgabe

Es ist daher eine Aufgabe der Erfindung, ein gegenüber dem Stand der Technik verbessertes Verfahren zu schaffen, welches es insbesondere ermöglicht, die Gesamtproduktivität eines Verbundes von mehreren Maschinen der grafischen Industrie, insbesondere von Druckmaschinen, im Falle von Störungen an einzelnen Maschinen zu erhalten oder sogar zu verbessern.

### Erfindungsgemäße Lösung

Diese Aufgabe wird erfindungsgemäß durch ein Verfahren mit den Merkmalen von Anspruch 1 gelöst. Vorteilhafte und daher bevorzugte Weiterbildungen der Erfindung ergeben sich aus den Unteransprüchen sowie aus der Beschreibung und der Zeichnung. Die Merkmale der Erfindung, der Weiterbildungen der Erfindung und des Ausführungsbeispiels zur Erfindung stellen auch in Kombination miteinander vorteilhafte Weiterbildungen der Erfindung dar.

Die Erfindung betrifft ein Verfahren zum rechnergestützten Versorgen eines Verbundes von mehreren Maschinen der grafischen Industrie mit jeweiligen digitalen Produktionsaufträgen, wobei wenigstens eine Maschine im Falle einer sensorisch erfassten Störung dieser Maschine in einem digitalen Rechner in einen eingeschränkten Zustand versetzt wird und der Rechner wenigstens einen Produktionsauftrag für die Maschine unter Berücksichtigung der Störung auswählt und die Maschine in eingeschränktem Zustand mit dem ausgewählten Produktionsauftrag versorgt.

Die Erfindung ermöglicht in vorteilhafter Weise, die Gesamtproduktivität eines Verbundes von mehreren Maschinen der grafischen Industrie, insbesondere von Druckmaschinen, im Falle von Störungen an einzelnen Maschinen zu erhalten oder gar zu verbessern.

### Weiterbildungen der Erfindung

Bevorzugte Weiterbildungen der Erfindung können sich durch eines oder mehrere der nachfolgend aufgelisteten Merkmale auszeichnen:
- dass jede Maschine im digitalen Rechner als digitale Referenz hinterlegt ist.
- dass im digitalen Rechner jeder Maschine, d.h. deren digitaler Referenz, ein uneingeschränkter erster Zustand oder ein eingeschränkter zweiter Zustand zugewiesen wird;
- dass im digitalen Rechner eine Mehrzahl von digitalen Produktionsaufträgen hinterlegt ist;
- dass im digitalen Rechner eine Mehrzahl von digitalen Produktionswerkzeugen hinterlegt ist;
- dass der eingeschränkte zweite Zustand einer Reduzierung des Druckformats entspricht;
- dass der eingeschränkte zweite Zustand einer Reduzierung der Druckgeschwindigkeit entspricht;
- dass im Verbund, sowohl wenigstens eine Maschine im uneingeschränkten ersten Zustand und gleichzeitig wenigstens eine weitere Maschine im eingeschränkten zweiten Zustand betrieben werden.

### Figur und Ausführungsbeispiel zur Erfindung

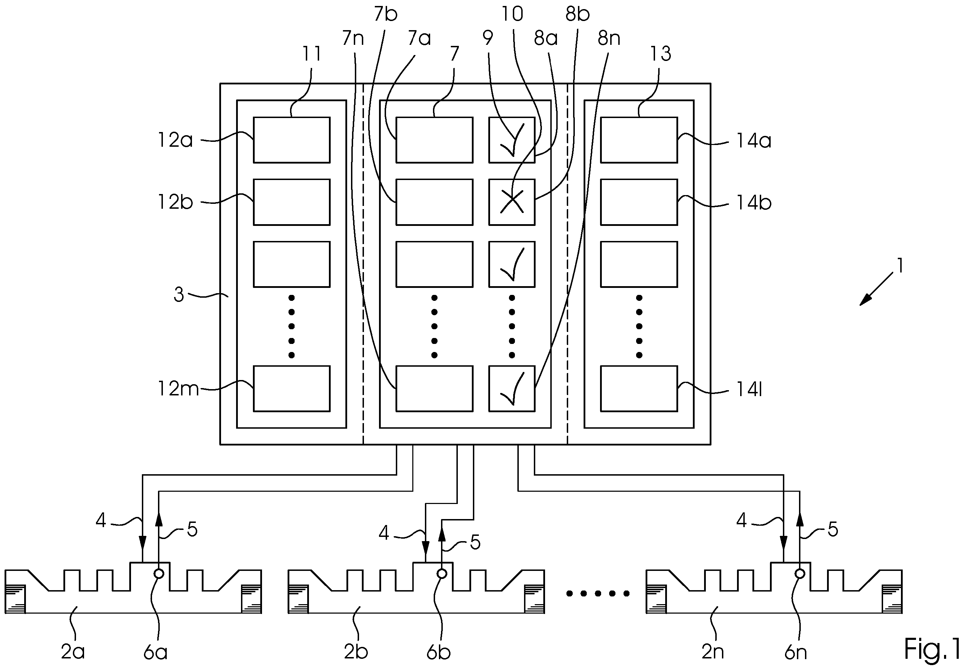

Die Erfindung und deren bevorzugte Weiterbildungen werden nachfolgend unter Bezug auf die Zeichnung, d.h. Figur 1, anhand eines bevorzugten Ausführungsbeispiels näher beschrieben.

Die Figur zeigt:
- Figur 1:: einen Verbund aus mehreren Maschinen der grafischen Industrie bei der Durchführung eines bevorzugten Ausführungsbeispiels des erfindungsgemäßen Verfahrens.

Figur 1 zeigt einen Verbund 1 aus mehreren Maschinen 2a bis 2n der grafischen Industrie, insbesondere Druckmaschinen und bevorzugt Tintendruckmaschinen bzw. Inkjetdruckmaschinen (im Folgenden "Maschinen"), und einen digitalen Rechner 3, insbesondere einen Workflow-Rechner, auf dem eine so genannte Workflow-Software läuft. Der Verbund kann bevorzugt eine Druckerei mit ihren Maschinen bzw. einen Maschinenpark mit mehreren Maschinen abbilden. Der Verbund erlaubt die Durchführung einer bevorzugten Ausführungsform des erfindungsgemäßen Verfahrens und ist entsprechend in der Figur 1 bei der Durchführung eines solchen Verfahrens dargestellt.

Jede Maschine 2a bis 2n steht über wenigstens zwei Verbindungen 4 und 5, z.B. Leitungen, mit dem Rechner 3 in Verbindung: Über Verbindung 4 werden Daten vom Rechner an die Maschine gesendet und über Verbindung 5 von der Maschine an den Rechner. Die beiden Verbindungen können auch eine gemeinsame Verbindung sein, z.B. ein sogenannter Bus. Die Verbindungen können auch drahtlos sein.

Jede Maschine 2a bis 2n umfasst wenigstens einen Sensor 6a bis 6n, welcher wenigstens eine Information über die jeweilige Maschine oder einen Teil dieser Maschine generiert. Diese Information oder eine daraus abgeleitete Information bzw. die entsprechenden Daten werden über die jeweilige Verbindung 4 an den Rechner geleitet. Die Sensoren können solche Sensoren sein, die üblicherweise in Druckmaschinen bereits vorhanden sind; es können aber auch spezielle Sensoren vorgesehen werden. Die Information kann einen Fehler an der Maschine betreffen oder sie kann bereits eine Fehlerauswertung mit Blick auf mögliche Handlungsoptionen (bevorzugt Änderung in der Zuweisung von Produktionsaufträgen an die Maschine) enthalten. Die Information oder die Informationen können Folgendes umfassen: Verfügbare Druckgeschwindigkeit, verfügbare Druckbereiche, verfügbare Farben (Farbraum), Aussage über Qualitätsniveau (z.B. fehlende Düse, schiefspritzende Düsen etc.), Ausfallzeitpunkt der Maschine und/oder bedruckbare Substrate.

Über den Rückkanal können die aktuellen Daten, aber auch ggf. Daten für die Zukunft übertragen werden. So kann z.B. vorhergesehen werden, ab wann die Druckgeschwindigkeit reduziert werden muss oder ab wann der Farbraum sich reduzieren wird.

Beispielsweise kann der Sensor 6b eine Versorgungseinrichtung für Tinte einer Tintendruckmaschine 2b überwachen und z.B. über eine sich verändernde Tintenpumpen-Drehzahl feststellen, ob einzelne Tinten-Düsen oder einzelne Tinten-Druckköpfe defekt sind. Ein solcher Defekt kann auch mittels anderer Sensoren bzw. Sensorik ermittelt werden, z.B. über einen Bildsensor, welcher das gedruckte Bild überwacht, oder über einen Sensor, welcher direkt am Druckkopf dessen Tropfen-Ausstoß überwacht. Die Erfindung ist daher nicht auf die Verwendung bestimmter Sensoren beschränkt. Es können auch andere Betriebsparameter überwacht werden: der Druck und/oder die Temperatur der Tinte in der Tintenleitung, die Steuerspannung einer Pumpe in der Tintenleitung und/oder der Füllstand eines Tintenbehälters. Wird ein solcher Fehler bzw. eine solche Einschränkung festgestellt, so wird eine entsprechende Information an den Rechner 3 übermittelt. Alternativ kann der Sensor seine Messwerte an den Rechner übermitteln und der Rechner analysiert den Fehler.

Der Rechner 3 umfasst einen digitalen Speicher 7 (oder Speicherbereich), in dem jede Maschine 2a bis 2n referenziert ist: Maschine 2a mit der Referenz 7a bis Maschine 2n mit der Referenz 7n.

In dem digitalen Speicher 7 ist zu jeder Maschinenreferenz 7a bis 7n eine Information gespeichert, welche den zugehörigen Maschinenzustand 8a bis 8n darstellt. Dabei sind wenigstens zwei verschiedene Zustände möglich: Ein erster Zustand 9, in welchem die betreffende Maschine voll funktionsfähig ("in Ordnung") ist und ohne Einschränkung Druckprodukte herstellen kann, und ein zweiter Zustand 10, in welchem die gleiche Maschine sich in einem eingeschränkten (Betriebs-) Zustand ("nicht in Ordnung" bzw. "Störungsmodus") befindet, dabei nicht voll funktionsfähig ist und nur Druckprodukte mit Einschränkungen herstellen kann. Es kann auch vorgesehen sein, für jede Maschine des Verbundes mehrere und verschiedene zweite Zustände vorab zu definieren und im Rechner bereitzuhalten und der Maschine im Falle eines Defekts einen passenden zweiten Zustand zuzuweisen. Im zweiten Zustand können z.B. das Druckformat, die Druckqualität und/oder die Druckgeschwindigkeit reduziert sein.

Es ist in dem gezeigten Beispiel erkennbar, dass die Maschine 2a in dem Rechner 3 bzw. dessen Speicher 7 als Maschine 7a mit dem Maschinenzustand 8a referenziert ist, wobei die Maschine sich im ersten Zustand 9 ("in Ordnung") befindet. Es ist weiterhin erkennbar, dass die Maschine 2b als Maschine 7b mit dem Maschinenzustand 8b referenziert ist, wobei die Maschine sich im zweiten Zustand 10 ("nicht in Ordnung") befindet, und so weiter bis zur Maschine 2n. In diesem Beispiel hat die Maschine 2b bzw. deren Sensor 6b über die Verbindung 7 dem Rechner 3 eine Information über eine Einschränkung, einen Fehler oder ähnliches übermittelt und entsprechend wurde der Maschine 2b bzw. deren Referenz 7b der zweite Zustand 10 zugewiesen. Umgekehrt kann eine Maschine den Rechner informieren, dass die Maschine wieder störungsfrei arbeitet, so dass der Rechner die Maschinenreferenz wieder zurück in den ersten Zustand ändert.

Beispielsweise kann ein vom Sensor 6b der Maschine 2b festgestellter Ausfall eines Tinten-Druckkopfes als entsprechende Information an den Rechner 3 übermittelt werden und der Rechner kann die Maschine 2b bzw. deren Referenz 7b vom ersten Zustand 9 in den zweiten Zustand 10 ändern. Dabei kann im Speicher 7 auch hinterlegt werden, welcher Art der Fehler/die Einschränkung der Maschine 2b ist und welche (eingeschränkten) Produktionsaufträge die Maschine noch problemlos ausführen kann. Bei Ausfall eines Tinten-Druckkopfes kann z.B. dessen Nummer bzw. Position in einer Reihe benachbarter Druckköpfe hinterlegt werden, so dass der Rechner ermitteln kann, welche eingeschränkten Druckformate mit den restlichen Tinten-Druckköpfen ("rechts und links" des ausgefallenen Kopfes) problemlos gedruckt werden können. Es wird daher ermöglicht, die Druckmaschine - wenn auch eingeschränkt - weiterzubetreiben und die Gesamtproduktivität des Verbundes in vorteilhafter Weise hoch zu halten. Der Rechner kann bei der Neuzuweisung von Produktionsaufträgen auch einzuhaltende Produktionstermine berücksichtigen.

In dem Rechner 3 bzw. in dessen digitalen Speicher 11 (oder Speicherbereich) sind noch abzuarbeitende, digitale Produktionsaufträge 12a bis 12n hinterlegt, bevorzugt Druckaufträge.

Beispielsweise kann der Produktionsauftrag 12a ein Druckauftrag für einen großformatigen Druck in sieben Farben mit einer gegebenen Auflage sein; der Produktionsauftrag 12b kann ein Druckauftrag für einen kleinformatigen Druck mit nur vier Farben mit einer ebenfalls gegebenen Auflage sein; und so weiter bis Produktionsauftrag 12m. Der Produktionsauftrag 12a kann zunächst der Maschine 2b bzw. deren Referenz 7b zugewiesen sein, da diese beispielsweise eine Großformatmaschine ist. Da nun aber die Maschine 2b bzw. deren Referenz 7b als im "eingeschränkten Zustand" 10 befindlich gekennzeichnet ist, weist der Rechner 3 der Maschine 2b bzw. deren Referenz 7b einen anderen Produktionsauftrag 12i zu, z.B. den Druckauftrag 12b, falls die Maschine 2b diesen Druckauftrag trotz der Einschränkung problemlos ausführen kann. Der zugewiesene Produktionsauftrag wird dann über die Verbindung 4 an die Maschine 2b übermittelt und von ihr ausgeführt.

Der Rechner 3 kann optional einen weiteren Speicher 13 (oder Speicherbereich) umfassen, in dem digitale Produktionswerkzeuge 14a bis 141, z.B. verschiedene Color-Management-Programme und/oder -Daten, hinterlegt sind. Auf diese Weise kann einer Maschine im eingeschränkten Zustand 10, z.B. der Maschine 2b bzw. deren Referenz 7b, ein an den vom Sensor 6b gemeldeten Fehler etc. angepasstes Produktionswerkzeug, z.B. ein Color-Management, zugewiesen werden. Einer Druckmaschine für den Siebenfarbendruck (K CMY OGV) kann im zweiten Zustand z.B. ein Color-Management-Programm und/oder Color-Management-Daten für den Vierfarbendruck (K CMY) zugewiesen werden.

Es kann auch vorgesehen sein, so genanntes "Predictive Maintenance" zu betreiben, d.h. mögliche Fehler aufgrund der Sensor-Daten vorherzusagen und schon vor einer tatsächlichen Störungsmeldung automatisiert Service bzw. Service-Mitarbeiter anzufordern und mit der Maschine uneingeschränkt oder ggf. im Störungsmodus so lange weiter zu produzieren, bis die Wartungsarbeiten an der Maschine beginnen. Auch durch diese Maßnahmen kann die Gesamtproduktivität des Verbundes hoch gehalten werden.

Ein auf dem Rechner 3 arbeitender Algorithmus zur Neuzuweisung von Produktionsaufträgen kann eine Entscheidungsmatrix beinhalten, die als Eingangsgrößen Parameter wie z.B. Termin/-e, Auftragsvolumen, minimal notwendiges Format, Auslastung der Maschine/-n, Kosten, Stillstandzeit der Maschine zur Behebung eines Fehlers oder zur Wartung, enthalten. Die Parameter können gewichtet und miteinander in der Entscheidungsmatrix verknüpft werden. Der Ergebnisvektor kann über die weitere Betriebsart der Druckmaschine(n) entscheiden. Denkbar ist auch ein rekursives (selbstlernendes System), das die Gewichtungsfaktoren im Laufe der Produktion verändert.

Die Druckmaschine ist bevorzugt eine Tintendruckmaschine, insbesondere eine DOD-Tintendruckmaschine ("Drop-on-Demand"), z.B. für den Siebenfarbendruck auf Bedruckstoffbogen, z.B. aus Papier, Karton oder Kunststofffolie, oder eine DOD-Tintendruckmaschine für das Bedrucken von beliebig geformten Gegenständen. Es kann aber auch vorgesehen sein, dass die Maschine eine Offsetdruckmaschine ist. Es kann auch vorgesehen sein, dass Maschinen im Verbund betrieben werden, welche verschiedenen Druckverfahren nutzen, z.B. den Tintendruck und den Offsetdruck. Die überwachten Komponenten der Maschine sind dabei bevorzugt solche Komponenten, die in der Maschine in großer Zahl vorgesehen sind und von denen eine einzelne Komponente mit hoher Wahrscheinlichkeit ausfällt. In der Tinten-Druckmaschine können dies die genannten Tinten-Druckköpfe sein; in der Tinten-Druckmaschine und in der OffsetDruckmaschine können dies z.B. Module eines modularen LED-Trockners sein.

### Bezugszeichenliste

- 1: Verbund von Maschinen
- 2a bis 2n: Maschinen/Druckmaschinen
- 3: Rechner
- 4: Verbindung (Rechner zu Maschine)
- 5: Verbindung (Maschine zu Rechner)
- 6a bis 6n: Sensoren
- 7: digitaler Speicher
- 7a bis 7n: im Speicher referenzierte Maschinen
- 8a bis 8n: Maschinenzustände
- 9: erster Zustand
- 10: zweiter Zustand (eingeschränkter Zustand)
- 11: digitaler Speicher
- 12a bis 12m: digitale Produktionsaufträge
- 13: digitaler Speicher
- 14a bis 141: digitale Produktionswerkzeuge

## Patentansprüche

1. Verfahren zum rechnergestützten Versorgen eines Verbundes (1) von mehreren Maschinen (2a bis 2n) der grafischen Industrie mit jeweiligen digitalen Produktionsaufträgen (12a bis 12m), wobei wenigstens eine Maschine (2b) im Falle einer sensorisch (6b) erfassten Störung dieser Maschine (2b) in einem digitalen Rechner (3) in einen eingeschränkten Zustand (10) versetzt wird und der Rechner (3) wenigstens einen digitalen Produktionsauftrag (12a bis 12m) für die Maschine (2b) unter Berücksichtigung der Störung auswählt und die Maschine (2b) im eingeschränkten Zustand (10) mit dem ausgewählten Produktionsauftrag (12a bis 12m) versorgt.

2. Verfahren nach Anspruch 1,
**dadurch gekennzeichnet,**
**dass** jede Maschine (2a bis 2n) im digitalen Rechner (3) als digitale Referenz (7a bis 7n) hinterlegt ist.

3. Verfahren nach Anspruch 2,
**dadurch gekennzeichnet,**
**dass** im digitalen Rechner (3) jeder Maschine (2a bis 2n), d.h. deren digitaler Referenz (7a bis 7n), ein uneingeschränkter erster Zustand (9) oder ein eingeschränkter, zweiter Zustand (10) zugewiesen wird.

4. Verfahren nach einem der vorhergehenden Ansprüche,
**dadurch gekennzeichnet,**
**dass** im digitalen Rechner (3) eine Mehrzahl von digitalen Produktionsaufträgen (12a bis 12n) hinterlegt ist.

5. Verfahren nach einem der vorhergehenden Ansprüche,
**dadurch gekennzeichnet,**
**dass** im digitalen Rechner (3) eine Mehrzahl von digitalen Produktionswerkzeugen (14a bis 141) hinterlegt ist.

6. Verfahren nach einem der vorhergehenden Ansprüche,
**dadurch gekennzeichnet,**
**dass** der eingeschränkte zweite Zustand (10) einer Reduzierung des Druckformats entspricht.

7. Verfahren nach einem der vorhergehenden Ansprüche,
**dadurch gekennzeichnet,**
**dass** der eingeschränkte zweite Zustand (10) einer Reduzierung der Druckgeschwindigkeit entspricht.

8. Verfahren nach einem der vorhergehenden Ansprüche,
**dadurch gekennzeichnet,**
**dass** im Verbund (1), sowohl wenigstens eine Maschine (2a bis 2n) im uneingeschränkten ersten Zustand (9) und gleichzeitig wenigstens eine weitere Maschine (2a bis 2n) im eingeschränkten zweiten Zustand (10) betrieben werden.
